# EUROPÄISCHE PATENTSCHRIFT

(11) **EP 3 873 755 B1**
(45) Veröffentlichungstag und Bekanntmachung des Hinweises auf die Patenterteilung: **19.11.2025**
(21) Anmeldenummer: 19794901.9
(22) Anmeldetag: 14.10.2019
(51) Int. Cl.: B60H 1/32, F02B 47/02, F02M 25/022

(54) **VERFAHREN UND ANORDNUNG ZUR STEUERUNG EINER WASSERGEWINNUNG IN EINEM KRAFTFAHRZEUG**
METHOD AND ASSEMBLY FOR CONTROLLING WATER RECOVERY IN A MOTOR VEHICLE
PROCÉDÉ ET ENSEMBLE DE COMMANDE D'UNE RÉCUPÉRATION D'EAU DANS UN VÉHICULE AUTOMOBILE

(30) Priorität: 31.10.2018 DE 102018127289
(43) Veröffentlichungstag der Anmeldung: 08.09.2021
(73) Patentinhaber: Kautex Textron GmbH & Co. KG, 53229 Bonn (DE)
(72) Erfinder: LIPPERHEIDE, Moritz, 53119 Bonn (DE); STELL, Björn, 51429 Bergisch Gladbach (DE); DRESCHERS, Daniel, 53721 Siegburg (DE)
(74) Vertreter: Richly & Ritschel Patentanwälte PartG mbB
(86) Internationale Anmeldenummer: PCT/EP2019/077796
(87) Internationale Veröffentlichungsnummer: WO 2020/088924

(56) Entgegenhaltungen:
- EP-A1- 2 607 647
- DE-A1- 102014 222 471
- DE-A1- 102017 121 740
- DE-A1- 102017 121 743

## Beschreibung

Die Erfindung betrifft ein Verfahren zur Steuerung einer Wassergewinnung in einem Kraftfahrzeug. Ferner betrifft die Erfindung eine Anordnung zur Steuerung einer Wassergewinnung in einem Kraftfahrzeug.

Der Wasserverbrauch in einem Kraftfahrzeug steigt durch neue Technologien in den Kraftfahrzeugen, wie Wassereinspritzsystemen oder auch durch den Einsatz von Sensoren für das autonome Fahren, welche für einen fehlerfreien Betrieb kontinuierlich gereinigt werden müssen, stetig an. Ferner kann eine Komforterhöhung für einen Benutzer des Fahrzeugs auch durch eine Verfügbarkeit von Nutz- und/oder Trinkwasser in dem Kraftfahrzeug erhöht werden. Um den dadurch verursachten, erhöhten Wasserverbrauch kompensieren zu können, werden in Kraftfahrzeugen immer größere Wasserbehälter eingebaut. Diese benötigen jedoch einen hohen Platzbedarf und Erhöhen das Gesamtgewicht des Kraftfahrzeugs.

Um insbesondere den für die Wasserbehälter benötigten Bauraum und das sich durch die Wasserbehälter ergebende Gewicht reduzieren zu können und zudem ein häufiges Nachfüllen von Wasser vermeiden zu können, kann aus der Luft Wasser, insbesondere Nutz- und/oder Trinkwasser, generiert werden. Dazu wird die (feuchte) Luft in einer Klimaanlage des Kraftfahrzeuges unterhalb ihres Taupunktes abgekühlt, so dass Wasser ausfällt und in einem oder mehreren Wasserbehältern innerhalb des Kraftfahrzeuges aufgefangen werden kann. Dadurch kann kontinuierlich Wasser gewonnen werden, so dass die zu bevorratende Menge an Wasser in dem Wasserbehälter reduziert werden kann und damit die Größe und dadurch auch das Gewicht der Wasserbehälter reduziert werden kann.

Die DE 10 2017 121740 A1 zeigt eine Anlage und ein Verfahren zur Wassergewinnung in einem Kraftfahrzeug.

Im Gegensatz zu einer stationären Wassergewinnung ist jedoch eine Wassergewinnung in einem sich fortbewegenden Kraftfahrzeug wesentlich aufwendiger, da viele Randbedingungen berücksichtigt werden müssen.

Der Erfindung liegt die Aufgabe zugrunde, ein Verfahren sowie eine Anordnung zur Steuerung einer Wassergewinnung in einem Kraftfahrzeug zur Verfügung zu stellen, welche sich durch eine verbesserte Funktionsweise auszeichnen.

Die Lösung der erfindungsgemäßen Aufgabe erfolgt mit den Merkmalen der unabhängigen Ansprüche. Vorteilhafte Ausgestaltungen und Weiterbildungen sind in den Unteransprüchen angegeben.

Gemäß dem erfindungsgemäßen Verfahren wird zur Wassergewinnung in einer Klimaanlage des Kraftfahrzeugs Luft auf eine Temperatur unterhalb ihres Taupunkts abgekühlt und das durch die Abkühlung ausfallende Wasser wird in einem Wasserbehälter aufgefangen, wobei während der Wassergewinnung die Klimaanlage mittels einer Wassergewinnungssteuereinrichtung gesteuert wird, wobei zur Steuerung der Wassergewinnung mittels der Wassergewinnungssteuereinrichtung eine Einstellung der Klimaanlage in Abhängigkeit von mindestens einem von einer Erfassungseinheit erfassten und an die Wassergewinnungssteuereinrichtung übertragenen Parameterwert erfolgt.

Das Verfahren zeichnet sich dadurch aus, dass die Wassergewinnung in einem Kraftfahrzeug nunmehr derart erfolgt, dass die Klimaanlage mittels der Wassergewinnungssteuereinrichtung aktiv gesteuert und geregelt werden kann, um eine möglichst effektive Wassergewinnung erreichen zu können. Die aktive Steuerung bzw. Regelung erfolgt mittels einem oder mehreren Parameterwerten, welche in einer Erfassungseinheit gespeichert sind und an die Wassergewinnungssteuereinrichtung übermittelt werden. Die Erfassungseinheit erfasst zuvor die jeweiligen Parameterwerte, wobei die Parameterwerte vorzugweise kontinuierlich aktualisiert werden können und aktualisiert an die Wassergewinnungssteuereinrichtung weitergeleitet werden können. Die Steuerung der Wassergewinnung kann dadurch zu jeder Zeit an bestehende Umgebungsbedingungen angepasst werden. Der mindestens eine Parameterwert ist vorzugsweise ein Parameterwert, welcher Umgebungsbedingungen des Kraftfahrzeugs wiedergibt. Werden mehrere Parameterwerte verwendet, können verschiedene Umgebungsbedingungen bei der Steuerung der Wassergewinnung berücksichtigt werden. Durch Parameterwerte kann der Steuerung der Wassergewinnung und damit der Wassergewinnungssteuereinrichtung ein Kennfeld aufgeprägt werden, so dass entsprechend den vorherrschenden Umgebungsbedingungen eine Einstellung der Klimaanlage derart erfolgen kann, dass eine maximale Menge an Wasser gewonnen werden kann. Bei der Einstellung der Klimaanlage können beispielsweise Klimaanlagensollwerte eingestellt werden. Klimaanlagensollwerte können beispielsweise gebildet sein aus einer Gebläseleistung oder einer Kompressorleistung.

Beispielsweise kann als Parameterwert ein von der Erfassungseinheit erfasstes Umgebungsklima des Kraftfahrzeugs verwendet werden. Das Umgebungsklima kann beispielweise ausgebildet sein durch eine Umgebungstemperatur und/oder eine Umgebungsluftfeuchtigkeit und/oder ein Umgebungsluftdruck. Der Parameterwert kann dann beispielsweise ein Umgebungsparameterwert sein. Der Umgebungsparameterwert kann dann beispielsweise ein Umgebungstemperaturwert und/oder ein Umgebungsluftfeuchtigkeitswert und/oder ein Umgebungsluftdruckwert sein.

Weiter ist es möglich, dass als Parameterwert ein von der Erfassungseinheit erfasster Fahrzeugdatensatz verwendet wird. Damit können auch Daten des Kraftfahrzeuges selber zur Steuerung der Wassergewinnung mit verwendet bzw. berücksichtigt werden. Die Steuerung der Wassergewinnung kann damit noch individueller und angepasster an bestimmte Situationen erfolgen.

Der Fahrzeugdatensatz kann beispielsweise ausgewählt sein aus einem oder mehreren der folgenden Daten: Navigationsdaten und/oder Wettervorhersagedaten und/oder Daten über einen Wasserfüllstand in dem Wasserbehälter. Weitere Daten sind ebenfalls denkbar. Über Navigationsdaten kann beispielsweise der Standort des Kraftfahrzeuges bestimmt werden. Ferner kann über Navigationsdaten der geplante Routenverlauf des Kraftfahrzeuges bestimmt werden. Durch den Standort und/oder den Routenverlauf kann beispielsweise auf klimatische Umgebungsbedingungen, Straßenverhältnisse, Dauer der Fahrt, etc. geschlossen werden. Die Navigationsdaten können von einem Navigationsgerät des Kraftfahrzeuges an die Erfassungseinheit übermittelt und darin gespeichert werden, so dass sie von der Wassergewinnungssteuereinrichtung abgerufen werden können. Wettervorhersagedaten können beispielsweise über eine Internetverbindung des Kraftfahrzeuges abgefragt werden. Über Wettervorhersagedaten kann eine Aussage über Sonnenzeiten, Regenzeiten und damit über zu erwartende Umgebungstemperaturen und/oder zu erwartende Luftfeuchtigkeitsdaten an verschiedenen Punkten entlang der geplanten Route des Kraftfahrzeuges getroffen werden. Diese Daten können ebenfalls an die Erfassungseinheit übermittelt und gespeichert werden, um jederzeit von der Wassergewinnungssteuereinrichtung abgerufen werden zu können. Ein weiterer Fahrzeugdatensatz kann ein Wasserfüllstand in dem Wasserbehälter sein, in welchen das aufgefangene Wasser geleitet wird. In Abhängigkeit des Wasserfüllstands kann ebenfalls eine Steuerung der Wassergewinnung erfolgen, da in Abhängigkeit der Höhe des Wasserfüllstands eine größere oder eine kleinere Menge an Wasser gewonnen werden kann, so dass eine bedarfsgerechte Wassergewinnung erfolgen kann.

Weiter kann es vorgesehen sein, dass die Erfassungseinheit einen Ist-Wasserfüllstand in dem Wasserbehälter misst und den gemessenen Ist-Wasserfüllstand mit einem Soll-Wasserfüllstand vergleicht. Durch eine Messung des Ist-Wasserfüllstands und einem Vergleich mit einem vorher definierten Soll-Wasserfüllstand kann ermittelt werden, wie hoch der Bedarf an aufzufangenden Wasser ist, indem die Differenz zwischen dem Ist-Wasserfüllstand und dem Soll-Wasserfüllstand ermittelt werden kann.

Der Bedarf an aufzufangendem Wasser kann in Abhängigkeit der geplanten Route des Kraftfahrzeugs variieren. Bevorzugt kann es daher vorgesehen sein, dass eine Veränderung des Ist-Wasserfüllstands anhand einer Fahrtstrecke des Kraftfahrzeugs ermittelt wird. Wird beispielsweise ein bestimmter Soll-Wasserfüllstand festgelegt, welcher nicht unterschritten werden soll, kann ermittelt werden, wie viel Wasser zu welchem Zeitpunkt generiert werden muss, um den Soll-Wasserfüllstand in dem Wasserbehälter nicht oder zumindest nicht dauerhaft zu unterschreiten. Ferner kann ein zu erwartender Wasserfüllstandsverlauf über die geplante Route des Kraftfahrzeugs ermittelt werden, so dass eine sehr vorausschauende Steuerung der Wassergewinnung erfolgen kann. Damit kann die Wassergewinnung sehr genau gesteuert werden.

Die Messung des Ist-Wasserfüllstands kann vor und/oder während einer Fahrt des Kraftfahrzeugs durchgeführt werden. Beispielsweise kann, sobald eine geplante Fahrtstrecke bekannt ist, beispielsweise durch Eingabe in ein Navigationsgerät, der Ist-Wasserfüllstand gemessen werden, so dass bereits vor Beginn der Fahrt mit dem Kraftfahrzeug mit einer Messung des Ist-Wasserfüllstands begonnen werden kann. Während der Fahrt kann eine Messung des Ist-Wasserfüllstands wiederholt erfolgen, so dass der Ist-Wasserfüllstand kontinuierlich bis zur Beendigung der Fahrt gemessen werden kann, so dass eine bedarfsgerechte Wassergewinnung erfolgen kann.

Weiter ist es möglich, dass die Erfassungseinheit mit einem Kalender des Fahrers des Kraftfahrzeugs synchronisiert werden kann. Durch eine Synchronisation können führzeitig geplante Fahrtrouten bzw. Fahrtstrecken anhand der in dem Kalender notierten Termine ermittelt werden und anhand der geplanten Fahrtroute kann bereits mehrere Stunden oder sogar mehrere Tage vor der Fahrt der Bedarf an Wasser ermittelt werden, um die Steuerung der Wassergewinnung noch bedarfsgerechter durchführen zu können. Die Erfassungseinheit kann mittels des Navigationsgerätes des Kraftfahrzeugs eine aktuelle Position des Standorts und/oder eine in dem Kalender notierte Startposition des Kraftfahrzeuges ermitteln und über das Navigationsgerät kann die Erfassungseinheit die zurückzulegende Fahrtroute ausgehend von der aktuellen Position des Standorts des Kraftfahrzeugs und/oder anhand der in dem Kalender notierten Startposition hin zu dem in dem Kalender notierten Ort, wo der entsprechende Termin stattfinden soll, bestimmen. Anhand der daraus ermittelten, geplanten Fahrtroute kann dann bereits sehr frühzeitig, mehrere Stunden oder mehrere Tage vor Beginn der entsprechenden Fahrt die notwendige Menge an aufzufangenden Wasser ermittelt werden, so dass die Einstellung der Steuerung der Wassergewinnung bereits sehr frühzeitig erfolgen kann. In der Wassergewinnungssteuereinrichtung können Sollwerte für eine Wassergewinnung pro Zeit und Sollwerte für eine Wassergewinnung pro elektrischer Leistung und/oder Sollwerte für eine Wassergewinnung pro mechanischer Leistung der Klimaanlage gespeichert werden. Die Sollwerte definieren vorzugsweise die notwendige, aufzufangende Wassermenge in Abhängigkeit einer bestimmten Zeit bzw. Zeitdauer und/oder in Abhängigkeit einer durch das Kraftfahrzeug, insbesondere durch elektrische Verbraucher des Kraftfahrzeugs, wie die Klimaanlage, während der Fahrt aufzubringenden elektrischen Leistung. Die mechanische Leistung kann beispielsweise aus einem Riemenantrieb der Klimaanlage resultieren. Aus diesen Sollwerten können besonders optimierte Kennfelder ermittelt werden, welche der Wassergewinnungssteuereinrichtung aufgeprägt werden können, um die Steuerung der Wassergewinnung möglichst effizient durchzuführen.

Die Sollwerte für die Wassergewinnung pro Zeit und/oder die Sollwerte für die Wassergewinnung pro elektrischer Leistung und/oder die Sollwerte für die Wassergewinnung pro mechanischer Leistung können experimentell bestimmt werden und/oder sie können aus Simulationsdaten der Klimaanlage berechnet werden.

Die Wassergewinnungssteuereinrichtung kann eigenständig arbeiten und damit eine separate Steuerung der Klimaanlage durchführen. Es ist aber auch möglich, dass die Wassergewinnungssteuereinrichtung mit einer Klimaanlagensteuereinrichtung zusammenwirkt und die Wassergewinnungssteuereinrichtung in Abhängigkeit von in der Klimaanlagensteuereinrichtung erfassten Klimaanlagenparametern geregelt wird. Wirkt die Wassergewinnungssteuereinrichtung mit der Klimaanlagensteuereinrichtung zusammen, können auch Klimaanlagenparamater bei der Steuerung der Wassergewinnung mitberücksichtigt werden, wodurch die Steuerung der Wassergewinnung noch individueller und genauer erfolgen kann. Bevorzugt können dann die von der Erfassungseinheit erfassten und an die Wassergewinnungssteuereinrichtung ermittelten Parameterwerte zur Einstellung der Klimaanlage mit den Klimaanlagenparametern verglichen und/oder synchronisiert werden, so dass eine Abstimmung der Parameterwerte in Abhängigkeit der Klimaanlagenparameter erfolgen kann.

Die Klimaanlagenparameter können beispielsweise ausgewählt sein aus mindestens einer der folgenden Daten: minimale Klimaanlagentemperatur und/oder maximale Klimaanlagentemperatur und/oder minimale Luftaustrittsgeschwindigkeit und/oder maximale Luftaustrittsgeschwindigkeit. Diese Daten können einen Einfluss auf das Komfortgefühl der Insassen des Kraftfahrzeugs haben, so dass diese Klimaanlagenparameter bei der Einstellung der Klimaanlage von der Wassergewinnungssteuereinrichtung zur Steuerung der Wassergewinnung bevorzugt nur in gewissen Grenzen angepasst werden sollten.

Bevorzugt kann es daher vorgesehen sein, dass die Klimaanlagenparameter ausgewählt sind in Abhängigkeit einer Komforteinstellung eines Fahrzeuginsassen des Kraftfahrzeugs. Eine Komforteinstellung eines Fahrzeuginsassen ist vorzugsweise eine personenbezogene Einstellung, bei welcher sich der Fahrzeuginsasse besonders wohl fühlt, beispielsweise indem die Innenraumtemperatur und/oder die Luftaustrittsausgeschwindigkeit von dem Fahrzeuginsassen als angenehm empfunden werden. Beispielsweise ist es bevorzugt vorgesehen, dass die minimale und/oder maximale Klimaanlagentemperatur in einem Bereich von +/- 8 Kelvin zu einer Ist-Innenraumtemperatur gewählt wird. Weiter kann es bevorzugt vorgesehen sein, dass die minimale und/oder maximale Luftaustrittsgeschwindigkeit der aus der Klimaanlage in den Innenraum des Kraftfahrzeugs austretenden Luft so gewählt werden, dass die Luftaustrittsgeschwindigkeit einen Wert von 0,15 m/s nicht überschreitet und einen Wert von 0,05 m/s nicht unterschreitet.

Die Lösung der erfindungsgemäßen Aufgabe erfolgt ferner mittels einer Anordnung zur Steuerung einer Wassergewinnung in einem Kraftfahrzeug, welche eine Klimaanlage, mittels welcher Luft auf eine Temperatur unterhalb ihres Taupunktes abkühlbar ist, einen Wasserbehälter, in welchem das durch die Abkühlung ausfallende Wasser auffangbar ist, eine Erfassungseinheit, in welcher mindestens ein Parameterwert erfasst ist, und eine Wassergewinnungssteuereinrichtung, an welche der mindestens eine in der Erfassungseinheit erfasste Parameterwert übertragbar ist und mittels welcher in Abhängigkeit des mindestens einen übertragenen Parameterwerts eine Einstellung der Klimaanlage zur Steuerung der Wassergewinnung durchführbar ist, aufweist.

In Bezug auf die Vorteile und weitere Ausgestaltungen der Vorrichtung wird auf das zuvor beschriebene Verfahren zur Steuerung einer Wassergewinnung verwiesen.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung eines Ablaufs eines erfindungsgemäßen Verfahrens zur Steuerung einer Wassergewinnung in einem Kraftfahrzeug,
- Fig. 2: eine schematische Darstellung eines Ablaufs des Verfahrens zur Steuerung einer Wassergewinnung in einem Kraftfahrzeug gemäß einer weiteren Ausgestaltung,
- Fig. 3: eine schematische Darstellung eines Ablaufs des Verfahrens zur Steuerung einer Wassergewinnung in einem Kraftfahrzeug gemäß einer weiteren Ausgestaltung, und
- Fig. 4: eine schematische Darstellung einer Anordnung zur Steuerung einer Wassergewinnung in einem Kraftfahrzeug.

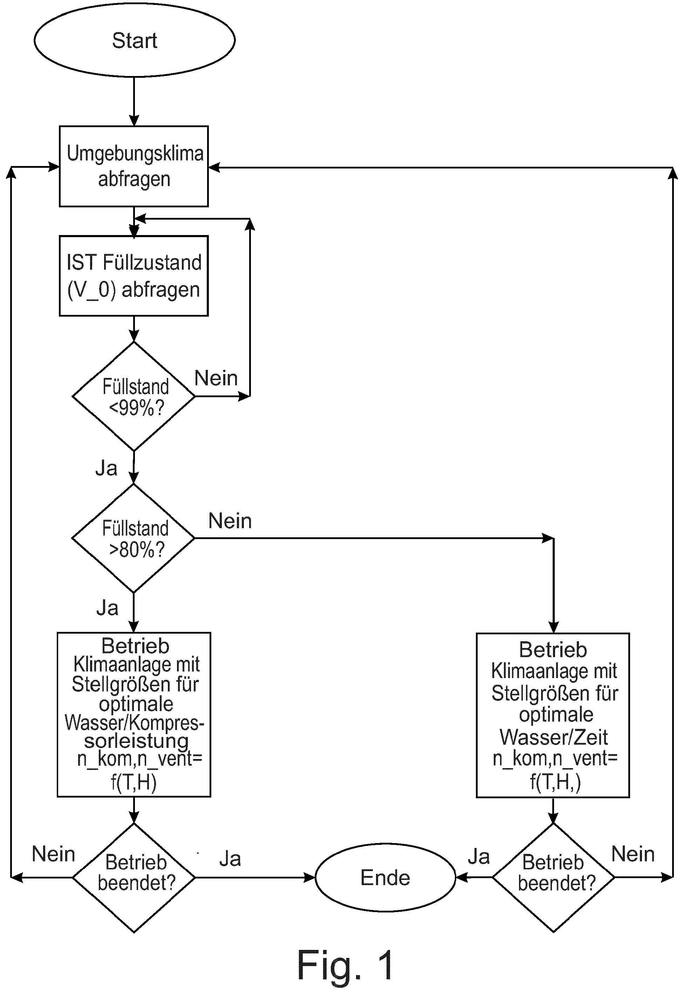

Fig. 1 zeigt schematisch einen Ablauf des erfindungsgemäßen Verfahrens zur Steuerung einer Wassergewinnung in einem Kraftfahrzeug.

Zu Beginn der Fahrt des Kraftfahrzeugs wird zunächst ein erster Parameterwert und oder mehrere Parameterwerte von einer Erfassungseinheit 10 erfasst, wobei bei der hier gezeigten Ausgestaltung hierfür das Umgebungsklima des Kraftfahrzeugs abgefragt wird. Beispielsweise kann hier die Umgebungstemperatur T und/oder die Umgebungsluftfeuchtigkeit H abgefragt werden. Die Abfragung kann beispielsweise über Sensoren des Kraftfahrzeugs erfolgen.

Nach Ermittlung eines oder mehrerer Parameterwerte durch eine Abfrage des Umgebungsklimas wird ein Ist-Wasserfüllstand des in einem Wasserbehälter 13 enthaltenen Wassers abgefragt. Ist der Ist-Wasserfüllstand größer als ein vorher definierter Soll-Wasserfüllstand, hier ausgedrückt durch die Abfrage "Füllstand < 99 %", so erfolgt eine erneute Abfrage so lange, bis der Ist-Wasserfüllstand aufgrund des Verbrauchs von Wasser durch das Kraftfahrzeug kleiner als ein vorher definierter Soll-Wasserfüllstand wird.

Dabei kann festgelegt sein, dass bei Erreichen einer bestimmten Differenz zwischen dem Soll-Wasserfüllstand und dem Ist-Wasserfüllstand, hier "Füllstand > 80%", eine Steuerung der Wassergewinnung in Abhängigkeit von Sollwerten für eine Wassergewinnung pro Zeit oder in Abhängigkeit von Sollwerten für eine Wassergewinnung pro elektrischer Leistung erfolgen soll.

Ist der Ist-Wasserfüllstand > 80 % so erfolgt eine Steuerung der Wassergewinnung in Abhängigkeit von Sollwerten für eine Wassergewinnung pro elektrischer Leistung der Klimaanlage 12, wobei hierbei für die Sollwerte der elektrischen Leistung die Kompressorleistung der Klimaanlage 12 verwendet wird. Der Wassergewinnungssteuereinrichtung 11 wird damit in Abhängigkeit der vorher bestimmten Parameterwerte anhand des erfassten Umgebungsklimas ein Kennfeld für eine Wassergewinnung pro elektrischer Leistung aufgeprägt, um eine entsprechende Steuerung der Wassergewinnung zu erreichen. Alternativ oder zusätzlich ist es auch möglich, dass eine Steuerung der Wassergewinnung in Abhängigkeit von Sollwerten für eine Wassergewinnung pro mechanischer Leistung der Klimaanlage 12 erfolgt.

Ist der Ist-Wasserfüllstand < 80 % so erfolgt eine Steuerung der Wassergewinnung in Abhängigkeit von Sollwerten für eine Wassergewinnung pro Zeit. Entsprechend der vorher bestimmten Parameterwerte anhand des erfassten Umgebungsklimas kann dann eine Einstellung der Klimaanlage bzw. der Klimaanlagensollwerte so gewählt werden, dass eine Wassergewinnung pro Zeit maximiert werden kann.

Entsprechend der ermittelten Daten kann zur Wassergewinnung die Klimaanlage 12 entsprechend mittels der Wassergewinnungssteuereinrichtung 11 gesteuert werden.

Ist die Fahrt des Kraftfahrzeuges beendet, wird auch die Steuerung der Wassergewinnung beendet. Die Steuerung der Wassergewinnung und damit die Wassergewinnung kann auch nach Beendigung der Fahrt fortgeführt werden, wenn zum Beispiel ausreichend Restenergie im Energiespeicher des Fahrzeugs vorhanden ist oder das Fahrzeug mittels eines Ladesteckers an einer Ladesäule angeschlossen ist und ein elektrischer Ladevorgang des Fahrzeugs erfolgt.

Ist die Fahrt noch nicht beendet, wird der Verfahrensablauf wiederholt, so dass kontinuierlich die Parameterwerte zur Einstellung der Klimaanlage für die Wassergewinnung angepasst und aktualisiert werden.

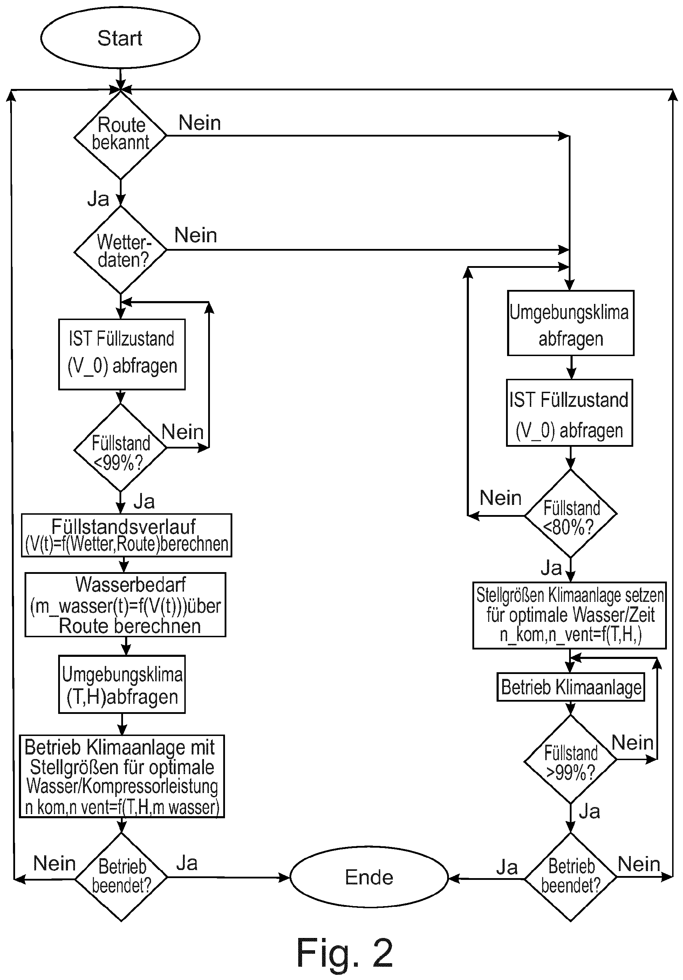

Fig. 2 zeigt eine Ausgestaltung für einen Ablauf des erfindungsgemäßen Verfahrens, bei welchem als Parameterwerte auch Navigationsdaten und Wetterdaten bzw. Wettervorhersagedaten mitberücksichtigt werden.

Dabei werden zunächst Navigationsdaten abgefragt, indem gefragt wird, ob die Route bzw. Fahrtstrecke des Kraftfahrzeugs bekannt ist.

Ist die Route bekannt, werden Wetterdaten bzw. Wettervorhersagedaten für die entsprechende Route abgefragt.

Liegen Wetterdaten bzw. Wettervorhersagedaten vor, so wird anschließend der Ist-Wasserfüllstand in dem Wasserbehälter 13 abgefragt.

Unterschreitet der Ist-Wasserfüllstand einen vorher definierten Soll-Wasserfüllstand, hier wenn der Füllstand < 99 % ist, wird ein zu erwartender Wasserfüllstandsverlauf in Abhängigkeit der zuvor ermittelten Wetterdaten bzw. Wettervorhersagedaten und/oder der zuvor ermittelten Navigationsdaten berechnet.

Anhand des berechneten Wasserfüllstandsverlaufs kann anschließend der für die Route benötigte Wasserbedarf berechnet werden.

Zur Ermittlung weiterer Parameterwerte für die Einstellung der Klimaanlage kann anschließend das aktuelle Umgebungsklima abgefragt werden.

Anhand aller dieser Daten und Parameterwerte kann mittels der Wassergewinnungssteuereinrichtung die Klimaanlage bedarfsgerecht gesteuert werden. Hierbei kann ein Kennfeld mit Sollwerten für die Wassergewinnung pro elektrischer Leistung der Klimaanlage der Wassergewinnungssteuereinrichtung aufgeprägt werden.

Liegen keine Wetterdaten bzw. Wettervorhersagedaten vor, welche als Parameterwerte verwendet werden können, wird eine Abfrage des Umgebungsklimas durchgeführt, um Parameterwerte in Abhängigkeit des Umgebungsklimas bei der Steuerung der Wassergewinnung verwenden zu können.

Anschließend wird der Ist-Wasserfüllstand abgefragt. Liegt der Ist-Wasserfüllstand unter dem zuvor definierten Soll-Wasserfüllstand, hier bei einem Füllstand < 80 %, erfolgt eine Einstellung der Klimaanlage und einer Steuerung der Klimaanlage 12 zur Wassergewinnung anhand der ermittelten Parameterwerte des Umgebungsklimas und einem der Wassergewinnungssteuereinrichtung 11 aufgeprägten Kennfeld für eine Wassergewinnung pro Zeit.

Anschließend wird der Betrieb der Klimaanlage 12 geprüft und der Ist-Wasserfüllstand abgefragt. Ist der Ist-Wasserfüllstand gleich oder größer als der Soll-Wasserfüllstand ("Füllstand > 99 %), so wird das Verfahren solange wiederholt, bis die Fahrt mit dem Kraftfahrzeug beendet ist.

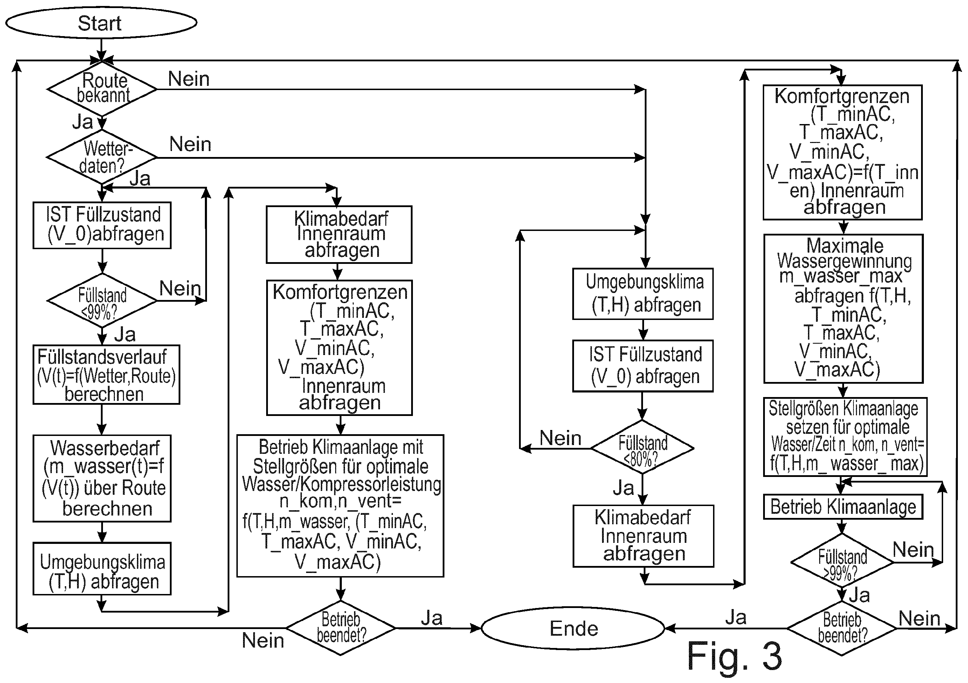

Fig. 3 zeigt eine Ausgestaltung für einen Ablauf des erfindungsgemäßen Verfahrens, bei welchem die Wassergewinnungssteuereinrichtung 11 mit einer Klimaanlagensteuereinrichtung 14 zusammenwirkt und die Wassergewinnungssteuereinrichtung 11 in Abhängigkeit von in der Klimaanlagensteuereinrichtung 14 erfassten Klimaanlagenparametern geregelt wird.

Auch hierbei werden zunächst zur Bestimmung von Parameterwerten für die Einstellung der Klimaanlage 12 zur Steuerung der Wassergewinnung Navigationsdaten durch die Abfrage "Route bekannt" und Wetterdaten bzw. Wettervorhersagedaten abgefragt.

Liegen zur Verwendung als Parameterwerte sowohl Navigationsdaten als auch Wetterdaten vor, so wird zunächst der Ist-Wasserfüllstand abgefragt.

Liegt dieser unter einem vorher definierten Soll-Wasserfüllstand, wird anhand der Navigationsdaten und Wetterdaten bzw. Wettervorhersagedaten der Füllstandsverlauf entlang der geplanten zu fahrenden Route des Kraftfahrzeugs berechnet, indem eine Veränderung des Ist-Wasserfüllstands anhand der Fahrtstrecke des Kraftfahrzeugs ermittelt wird. Anhand des berechneten Füllstandsverlaufs kann der erforderliche Wasserbedarf entlang der geplanten Route bzw. der geplanten Fahrtstrecke berechnet werden.

Zur Ermittlung weiterer Parameterwerte für die Einstellung der Klimaanlage kann anschließend das aktuelle Umgebungsklima abgefragt werden.

Anschließend werden Klimaanlagenparameter abgefragt.

Dabei wird zunächst der Klimabedarf, d. h. das gewünschte Klima, in dem Innenraum des Kraftfahrzeugs abgefragt. Dabei können die minimale Klimaanlagentemperatur T_minAC, die maximale Klimaanlagentemperatur T_maxAC, die minimale Luftaustrittsgeschwindigkeit V_minAC und/oder die maximale Luftaustrittsgeschwindigkeit V_maxAC ermittelt werden, um Komfortgrenzen für die Insassen in dem Innenraum des Kraftfahrzeugs abzufragen.

Anhand aller dieser Daten und Parameterwerte kann mittels der Wassergewinnungssteuereinrichtung und auch mittels der Klimaanlagensteuereinrichtung die Klimaanlage bedarfsgerecht gesteuert werden, um eine optimale Wassergewinnung zu erreichen. Hierbei kann ein Kennfeld mit Sollwerten für die Wassergewinnung pro elektrischer Leistung der Klimaanlage der Wassergewinnungssteuereinrichtung aufgeprägt werden.

Liegen als Parameterwerte keine Navigationsdaten oder keine Wetterdaten bzw. Wettervorhersagedaten vor, wird zunächst eine Abfrage des Umgebungsklimas durchgeführt, um Parameterwerte in Abhängigkeit des Umgebungsklimas bei der Steuerung der Wassergewinnung verwenden zu können.

Anschließend wird der Ist-Wasserfüllstand abgefragt. Liegt der Ist-Wasserfüllstand unter dem zuvor definierten Soll-Wasserfüllstand, hier bei einem Füllstand < 80 %, werden Klimaanlagenparameter abgefragt. Dabei wird zunächst der Klimabedarf, d. h. das gewünschte Klima, in dem Innenraum des Kraftfahrzeugs angefragt. Dabei können die minimale Klimaanlagentemperatur T_minAC, die maximale Klimaanlagentemperatur T_maxAC, die minimale Luftaustrittsgeschwindigkeit V_minAC und/oder die maximale Luftaustrittsgeschwindigkeit V_maxAC ermittelt werden, um Komfortgrenzen für die Insassen in dem Innenraum des Kraftfahrzeugs abzufragen.

In Abhängigkeit der ermittelten Parameterwerte der Wassergewinnungssteuereinrichtung 11, wie Daten zum Umgebungsklima, insbesondere Umgebungstemperatur T und Umgebungsluftfeuchtigkeit H, und in Abhängigkeit der ermittelten Klimaanlagenparameter, wie die minimale Klimaanlagentemperatur T_minAC, die maximale Klimaanlagentemperatur T_maxAC, die minimale Luftaustrittsgeschwindigkeit V_minAC und/oder die maximale Luftaustrittsgeschwindigkeit V_maxAC, kann die maximal mögliche Menge an zu gewinnenden Wasser ermittelt werden.

Anschließend erfolgt eine Einstellung der Klimaanlage 12 und eine Steuerung der Klimaanlage 12 zur Wassergewinnung anhand der ermittelten Parameterwerte T, H des Umgebungsklimas und einem der Wassergewinnungssteuereinrichtung 11 aufgeprägten Kennfeld für eine Wassergewinnung pro Zeit.

Anschließend wird der Betrieb der Klimaanlage 12 geprüft und der Ist-Wasserfüllstand abgefragt. Ist der Ist-Wasserfüllstand gleich oder größer des Soll-Wasserfüllstands ("Füllstand ≥ 99 %"), so wird das Verfahren solange wiederholt, bis die Fahrt mit dem Kraftfahrzeug beendet ist.

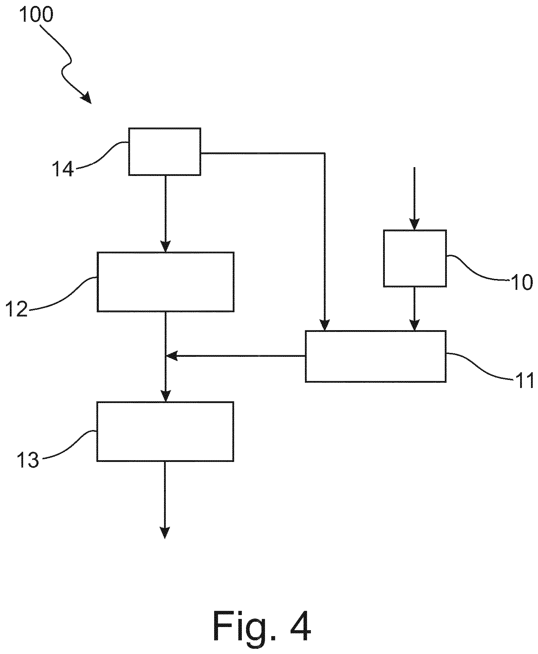

Fig. 4 zeigt schematisch eine Anordnung 100 zur Steuerung einer Wassergewinnung in einem Kraftfahrzeug.

Die Anordnung 100 weist eine Klimaanlage 12 des Kraftfahrzeugs auf, mittels welcher zur Wassergewinnung Luft, beispielsweise Umgebungsluft, auf eine Temperatur unterhalb ihres Taupunkts abgekühlt wird. Bei der Abkühlung der Luft fällt Wasser aus, welches in einem Wasserbehälter 13 aufgefangen werden kann. Aus diesem Wasserbehälter 13 kann das Wasser dann an verschiedene Stationen und andere Wasserbehälter innerhalb des Kraftfahrzeugs weitergeleitet werden.

Bei der Wassergewinnung wird die Klimaanlage 12 mittels einer Wassergewinnungssteuereinrichtung 11 gesteuert, um eine möglichst optimale Wasserausbringung erreichen zu können. Die Steuerung mittels der Wassergewinnungssteuereinrichtung 11 erfolgt über einen oder mehrere Parameterwerte, welche beispielsweise aus dem Umgebungsklima rund um das Kraftfahrzeug und/oder aus einem Fahrzeugdatensatz des Kraftfahrzeuges ermittelt werden können. Zur Erfassung dieser Parameterwerte ist eine Erfassungseinheit 10 vorgesehen, welche die erfassten Parameterwerte speichert und an die Wassergewinnungssteuereinrichtung 11 weiterleitet. Anhand dieser Parameterwerte und gegebenenfalls weiteren Daten und/oder Parametern kann eine aktive, an die Umgebungsbedingungen des Kraftfahrzeugs angepasst Steuerung der Wassergewinnung erfolgen.

### Bezugszeichen

- 100: Anordnung
- 10: Erfassungseinheit
- 11: Wassergewinnungssteuereinrichtung
- 12: Klimaanlage
- 13: Wasserbehälter
- 14: Klimaanlagensteuereinrichtung

- T: Umgebungstemperatur
- H: Umgebungsluftfeuchtigkeit
- T_minAC: minimale Klimaanlagentemperatur
- T_maxAC: maximale Klimaanlagentemperatur
- V_minAC: minimale Luftaustrittsgeschwindigkeit
- V_maxAC: maximale Luftaustrittsgeschwindigkeit

## Patentansprüche

1. Verfahren zur Steuerung einer Wassergewinnung in einem Kraftfahrzeug, bei welchem zur Wassergewinnung in einer Klimaanlage (12) des Kraftfahrzeugs Luft auf eine Temperatur unterhalb ihres Taupunkts abgekühlt wird und das durch die Abkühlung ausfallende Wasser in einem Wasserbehälter (13) aufgefangen wird, wobei während der Wassergewinnung die Klimaanlage (12) mittels einer Wassergewinnungssteuereinrichtung (11) gesteuert wird, wobei zur Steuerung der Wassergewinnung mittels der Wassergewinnungssteuereinrichtung (11) eine Einstellung der Klimaanlage (12) in Abhängigkeit von mindestens einem von einer Erfassungseinheit (10) erfassten und an die Wassergewinnungssteuereinrichtung (11) übertragenen Parameterwert erfolgt, **dadurch gekennzeichnet, dass** in der Wassergewinnungssteuereinrichtung (11) Sollwerte für eine Wassergewinnung pro elektrischer Leistung und/oder Sollwerte für eine Wassergewinnung pro mechanischer Leistung der Klimaanlage (12) gespeichert werden.

2. Verfahren nach Anspruch 1, **dadurch gekennzeichnet, dass** als Parameterwert ein von der Erfassungseinheit (10) erfasstes Umgebungsklima des Kraftfahrzeugs verwendet wird.

3. Verfahren nach Anspruch 1 oder 2, **dadurch gekennzeichnet, dass** als Parameterwert ein von der Erfassungseinheit (10) erfasster Fahrzeugdatensatz verwendet wird.

4. Verfahren nach Anspruch 3, **dadurch gekennzeichnet, dass** der Fahrzeugdatensatz ausgewählt ist aus einem oder mehreren der folgenden Daten: Navigationsdaten und/oder Wettervorhersagedaten und/oder Daten über einen Wasserfüllstand in dem Wasserbehälter.

5. Verfahren nach einem der Ansprüche 1 bis 4, **dadurch gekennzeichnet, dass** die Erfassungseinheit (10) einen Ist-Wasserfüllstand in dem Wasserbehälter misst und den gemessenen Ist-Wasserfüllstand mit einem Soll-Wasserfüllstand vergleicht.

6. Verfahren nach Anspruch 5, **dadurch gekennzeichnet, dass** eine Veränderung des Ist-Wasserfüllstands anhand einer Fahrtstrecke des Kraftfahrzeugs ermittelt wird.

7. Verfahren nach Anspruch 5 oder 6, **dadurch gekennzeichnet, dass** die Messung des Ist-Wasserfüllstands vor und/oder während einer Fahrt des Kraftfahrzeugs durchgeführt wird.

8. Verfahren nach einem der Ansprüche 1 bis 7, **dadurch gekennzeichnet, dass** die Erfassungseinheit (10) mit einem Kalender eines Fahrers des Kraftfahrzeugs synchronisiert wird.

9. Verfahren nach Anspruch 1, **dadurch gekennzeichnet, dass** die Sollwerte für die Wassergewinnung pro elektrischer Leistung und/oder die Sollwerte für die Wassergewinnung pro mechanischer Leistung experimentell bestimmt werden und/oder aus Simulationsdaten der Klimaanlage (12) berechnet werden.

10. Verfahren nach einem der Ansprüche 1 bis 9, **dadurch gekennzeichnet, dass** die Wassergewinnungssteuereinrichtung (11) mit einer Klimaanlagensteuereinrichtung (14) zusammenwirkt und die Wassergewinnungseinrichtung (11) in Abhängigkeit von in der Klimaanlagensteuereinrichtung (14) erfassten Klimaanlagenparametern geregelt wird.

11. Verfahren nach Anspruch 10, **dadurch gekennzeichnet, dass** die Klimaanlagenparameter ausgewählt sind aus mindestens einer der folgenden Daten: minimale Klimaanlagentemperatur (T_minAC) und/oder maximale Klimaanlagentemperatur (T_maxAC) und/oder minimale Luftaustrittsgeschwindigkeit (V_minAC) und/oder maximale Luftaustrittsgeschwindigkeit (V_maxAC).

12. Verfahren nach Anspruch 10 oder 13, **dadurch gekennzeichnet, dass** die Klimaanlagenparameter ausgewählt sind in Abhängigkeit einer Komforteinstellung eines Fahrzeuginsassen des Kraftfahrzeugs.

13. Anordnung (100) zur Steuerung einer Wassergewinnung in einem Kraftfahrzeug, mit
einer Klimaanlage (12), mittels welcher zur Wassergewinnung Luft auf eine Temperatur unterhalb ihres Taupunktes abkühlbar ist,
einem Wasserbehälter (13), in welchem das durch die Abkühlung ausfallende Wasser auffangbar ist,
einer Erfassungseinheit (10), in welcher mindestens ein Paramaterwert erfasst ist, und
einer Wassergewinnungssteuereinrichtung (11), an welche der mindestens eine in der Erfassungseinheit (10) erfasste Parameterwert übertragbar ist und mittels welcher in Abhängigkeit des mindestens einen übertragenen Parameterwerts eine Einstellung der Klimaanlage (12) zur Steuerung der Wassergewinnung gemäß einem der Ansprüche 1-12 durchgeführt wird.

## Claims

1. Method for controlling water recovery in a motor vehicle, in which method, to recover water in an air-conditioning system (12) of the motor vehicle, air is cooled to a temperature below its dew point, and the water precipitating as a result of the cooling is collected in a water container (13), wherein, during water recovery,
the air-conditioning system (12) is controlled by means of a water recovery control device (11), wherein, to control the water recovery by means of the water recovery control device (11), the air-conditioning system (12) is adjusted on the basis of at least one parameter value which is detected by a detection unit (10) and transmitted to the water recovery control device (11), **characterized in that** target values for water recovery per electrical output and/or target values for water recovery per mechanical output of the air-conditioning system (12) are stored in the water recovery control device (11).

2. Method according to claim 1, **characterized in that** an ambient climate of the motor vehicle detected by the detection unit (10) is used as the parameter value.

3. Method according to claim 1 or 2, **characterized in that** a vehicle data set detected by the detection unit (10) is used as the parameter value.

4. Method according to claim 3, **characterized in that** the vehicle data set is selected from one or more of the following data: navigation data and/or weather forecast data and/or data about a water level in the water container.

5. Method according to any of claims 1 to 4, **characterized in that** the detection unit (10) measures an actual water level in the water container and compares the measured actual water level to a target water level.

6. Method according to claim 5, **characterized in that** a change in the actual water level is determined on the basis of a driving distance of the motor vehicle.

7. Method according to claim 5 or 6, **characterized in that** the actual water level is measured before and/or during a journey of the motor vehicle.

8. Method according to any of claims 1 to 7, **characterized in that** the detection unit (10) is synchronized with a calendar of a driver of the motor vehicle.

9. Method according to claim 8, **characterized in that** the target values for the water recovery per electrical output and/or the target values for the water recovery per mechanical output are determined experimentally and/or calculated from simulation data from the air-conditioning system (12).

10. Method according to any of claims 1 to 9, **characterized in that** the water recovery control device (11) interacts with an air-conditioning control device (14) and the water recovery device (11) is regulated on the basis of air-conditioning system parameters detected in the air-conditioning control device (14).

11. Method according to claim 10, **characterized in that** the air-conditioning system parameters are selected from at least one of the following data: minimum air-conditioning system temperature (T_minAC) and/or maximum air-conditioning system temperature (T_maxAC) and/or minimum air outlet velocity (V_minAC) and/or maximum air outlet
velocity (V_maxAC).

12. Method according to claim 10 or 11, **characterized in that** the air-conditioning system parameters are selected on the basis of a comfort setting of a vehicle occupant of the motor vehicle.

13. Assembly (100) for controlling water recovery in a motor vehicle, comprising
an air-conditioning system (12) by means of which, to recover water, air can be cooled to a temperature below its dew point, a water container (13) in which the water that precipitates as a result of the cooling can be collected,
a detection unit (10) in which at least one parameter value is detected, and
a water recovery control device (11) to which the at least one parameter value detected in the detection unit (10) can be transmitted and by means of which the air-conditioning system (12) is adjusted to control the water recovery on the basis of the at least one transmitted parameter value in accordance with any of claims 1 to 12.

## Revendications

1. Procédé pour la commande d'une récupération d'eau dans un véhicule automobile, dans lequel, pour la récupération d'eau dans une installation de climatisation (12) du véhicule automobile, de l'air est refroidi à une température inférieure à son point de rosée et l'eau précipitée par le refroidissement est recueillie dans un réservoir pour eau (13), dans lequel l'installation de climatisation (12) est commandée pendant la récupération d'eau au moyen d'un dispositif de commande de récupération d'eau (11), dans lequel, pour la commande de la récupération d'eau au moyen du dispositif de commande de récupération d'eau (11), un réglage de l'installation de climatisation (12) est effectué en fonction d'au moins une valeur de paramètre détectée par une unité de détection (10) et transmise au dispositif de commande de récupération d'eau (11), **caractérisé en ce que** des valeurs de consigne pour une récupération d'eau par puissance électrique et/ou des valeurs de consigne pour une récupération d'eau par puissance mécanique de l'installation de climatisation (12) sont mémorisées dans le dispositif de commande de récupération d'eau (11).

2. Procédé selon la revendication 1, **caractérisé en ce qu'un** climat ambiant du véhicule automobile détecté par l'unité de détection (10) est utilisé comme valeur de paramètre.

3. Procédé selon la revendication 1 ou 2, **caractérisé en ce qu'un** jeu de données de véhicule détecté par l'unité de détection (10) est utilisé comme valeur de paramètre.

4. Procédé selon la revendication 3, **caractérisé en ce que** le jeu de données de véhicule est choisi parmi une ou plusieurs des données suivantes : données de navigation et/ou données de prévisions météorologiques et/ou données concernant un niveau d'eau dans le réservoir pour eau.

5. Procédé selon l'une des revendications 1 à 4, **caractérisé en ce que** l'unité de détection (10) mesure un niveau d'eau réel dans le réservoir pour eau et compare le niveau d'eau réel mesuré avec un niveau d'eau de consigne.

6. Procédé selon la revendication 5, **caractérisé en ce qu'**une modification du niveau d'eau réel est déterminée à l'aide d'un trajet du véhicule automobile.

7. Procédé selon la revendication 5 ou 6, **caractérisé en ce que** la mesure du niveau d'eau réel est réalisée avant et/ou pendant un trajet du véhicule automobile.

8. Procédé selon l'une des revendications 1 à 7, **caractérisé en ce que** l'unité de détection (10) est synchronisée avec un calendrier d'un conducteur du véhicule automobile.

9. Procédé selon la revendication 1, **caractérisé en ce que** les valeurs de consigne pour la récupération d'eau par puissance électrique et/ou les valeurs de consigne pour la récupération d'eau par puissance mécanique sont déterminées de manière expérimentale et/ou sont calculées à partir de données de simulation de l'installation de climatisation (12).

10. Procédé selon l'une des revendications 1 à 9, **caractérisé en ce que** le dispositif de commande de récupération d'eau (11) coopère avec un dispositif de commande d'installation de climatisation (14) et le dispositif de récupération d'eau (11) est régulé en fonction de paramètres d'installation de climatisation détectés dans le dispositif de commande d'installation de climatisation (14).

11. Procédé selon la revendication 10, **caractérisé en ce que** les paramètres d'installation de climatisation sont choisis parmi au moins l'une des données suivantes : température minimale d'installation de climatisation (T_minAC) et/ou température maximale d'installation de climatisation (T_maxAC) et/ou vitesse minimale de sortie d'air (V_minAC) et/ou vitesse maximale de sortie d'air (V_maxAC).

12. Procédé selon la revendication 10 ou 13, **caractérisé en ce que** les paramètres d'installation de climatisation sont choisis en fonction d'un réglage de confort d'un occupant du véhicule automobile.

13. Agencement (100) pour la commande d'une récupération d'eau dans un véhicule automobile, comportant
une installation de climatisation (12), au moyen de laquelle de l'air peut être refroidi à une température inférieure à son point de rosée pour la récupération d'eau, un réservoir pour eau (13) dans lequel l'eau précipitée par le refroidissement peut être recueillie,
une unité de détection (10) dans laquelle au moins une valeur de paramètre est détectée, et
un dispositif de commande de récupération d'eau (11) auquel l'au moins une valeur de paramètre détectée dans l'unité de détection (10) peut être transmise et au moyen duquel, en fonction de l'au moins une valeur de paramètre transmise, un réglage de l'installation de climatisation (12) est effectué pour la commande de la récupération d'eau selon l'une des revendications 1 à 12.
